# EUROPÄISCHE PATENTSCHRIFT

(11) **EP 1 754 019 B1**
(45) Veröffentlichungstag und Bekanntmachung des Hinweises auf die Patenterteilung: **01.04.2009**
(21) Anmeldenummer: 05733655.4
(22) Anmeldetag: 15.04.2005
(51) Int. Cl.: G01B 21/04

(54) **VORRICHTUNG UND VERFAHREN ZUR KOORDINATENMESSUNG**
DEVICE AND METHOD FOR COORDINATE MEASUREMENT
DISPOSITIF ET PROCEDE POUR LA MESURE DE COORDONNEES

(30) Priorität: 27.05.2004 DE 102004026022; 11.03.2005 DE 102005011285
(43) Veröffentlichungstag der Anmeldung: 21.02.2007
(73) Patentinhaber: Dr. Johannes Heidenhain GmbH, 83292 Traunreut (DE)
(72) Erfinder: HAGL, Rainer, 83352 Altenmarkt (DE); REITER, Herbert, 84549 Engelsberg (DE); STRASSER, Erich, 83308 Trostberg (DE)
(86) Internationale Anmeldenummer: PCT/EP2005/003966
(87) Internationale Veröffentlichungsnummer: WO 2005/119173

(56) Entgegenhaltungen:
- EP-A- 0 073 495
- DE-A1- 10 050 795
- US-A- 5 189 806
- US-A- 5 862 604
- US-A1- 2002 185 998
- US-A1- 2003 086 095

## Beschreibung

Die Erfindung betrifft eine Vorrichtung und ein Verfahren zur Koordinatenmessung an einem Werkstück.

In numerisch gesteuerten Werkzeugmaschinen, insbesondere Fräsmaschinen, werden häufig schaltende Tastköpfe eingesetzt, um automatisierte Koordinatenmessungen durchzuführen. Derartige Tastköpfe verfügen über einen Taststift, der ein Schaltereignis ausgelöst, wenn er ein Hindernis, wie zum Beispiel die Oberfläche eines Werkstücks berührt. Typische Anwendungsgebiete für automatisierte Messungen sind das Ausrichten von Werkstücken, Setzen von Bezugspunkten, Vermessen von Werkstücken zur Qualitätskontrolle, sowie das Digitalisieren von dreidimensionalen Werkstückoberflächen.

Zur Durchführung der Messungen wird der Tastkopf anstelle eines Werkzeugs in die Werkzeugspindel eingesetzt. Dadurch kann er von der numerischen Steuerung der Werkzeugmaschine in den verschiedenen Koordinatenachsen positioniert werden. Zur Koordinatenmessung wird der Tastkopf, gesteuert von der numerischen Steuerung, auf das Werkstück zu bewegt, bis ein Schaltereignis anzeigt, dass die Oberfläche des Werkstücks erreicht wurde. Dieser Vorgang wird als Antastvorgang bezeichnet. Während des Antastvorgangs wird die räumliche Position des Tastkopfes in den zu messenden Koordinatenachsen kontinuierlich in Zeitintervallen, die von der Zykluszeit der numerischen Steuerung bestimmt werden, mit Positionsmessgeräten gemessen und die Positionswerte zur numerischen Steuerung übertragen. Die Positionswerte werden von der numerischen Steuerung als Lageistwerte für ihre internen Regelkreise benötigt. Übliche Zykluszeiten liegen z.B. in der Größenordnung von 50 µs.

Da bei dieser Vorgehensweise die Positionswerte zeitdiskret in festen Zeitintervallen ermittelt werden, das Schaltereignis aber asynchron dazu auftritt, ergibt sich ein Messfehler, der umso größer wird, je höher die Antastgeschwindigkeit ist, bzw. je länger die Zykluszeit ist. Dieser Messfehler addiert sich zum allgemeinen Messfehler der Werkzeugmaschine und verschlechtert somit die Qualität des Gesamtsystems. Nimmt man beispielsweise die oben genannte Zykluszeit von 50 µs und eine Antastgeschwindigkeit von 1 m/min, so ergibt sich ein maximaler Positionsfehler von ca. 0,83 µm. Das entspricht der Wegstrecke, die der Tastkopf bei einer Antastgeschwindigkeit von 1 m/min in 50 µs zurücklegt. Ein zusätzlicher Positionsfehler in dieser Größenordnung ist in vielen Fällen nicht akzeptabel.

Da die Zykluszeit von numerischen Steuerungen, wie sie nach dem Stand der Technik bekannt sind, nicht beeinflusst werden kann, ist die Verringerung der Antastgeschwindigkeit meist die einzige Möglichkeit, den zusätzlichen Positionsfehler, der durch die zeitdiskrete Funktionsweise entsteht, zu verringern. Das führt aber auch zu einem geringeren Durchsatz und somit zu einer Reduzierung der Wirtschaftlichkeit.

Einen Kompromiss zwischen hoher Antastgeschwindigkeit und kleinem Positionsfehler beschreibt die EP0073495B1. Hier wird ein Verfahren zur Koordinatenmessung vorgeschlagen, bei dem eine erste Antastung mit hoher Antastgeschwindigkeit durchgeführt wird, der Tastkopf anschließend wieder eine kleine Strecke von der Werkstücksoberfläche weggefahren und die Antastung mit geringerer Antastgeschwindigkeit wiederholt wird. Durch die geringere Antastgeschwindigkeit beim zweiten Antastvorgang wird eine höhere Genauigkeit erreicht. Nachteilig an diesem Verfahren ist, dass es hohe Anforderungen an die Programmierung der numerischen Steuerung stellt und der Zeitaufwand durch den zweimaligen Richtungswechsel nur unwesentlich gesenkt werden kann.

Es ist daher Aufgabe der Erfindung, ein Verfahren zur Koordinatenmessung anzugeben, das eine hohe Antastgeschwindigkeit in Verbindung mit einer hohen Genauigkeit aufweist.

Diese Aufgabe wird gelöst durch ein Verfahren nach Anspruch 1. Vorteilhafte Details des Verfahrens ergeben sich aus den von Anspruch 1 abhängigen Ansprüchen.

Weiter ist es Aufgabe der Erfindung, eine Vorrichtung zur Koordinatenmessung anzugeben, mit der die Messung von Koordinaten an Werkstücken mit hoher Antastgeschwindigkeit bei gleichzeitiger hoher Genauigkeit durchgeführt werden kann.

Diese Aufgabe wird gelöst durch eine Vorrichtung zur Koordinatenmessung nach Anspruch 6. Vorteilhafte Details dieser Vorrichtung zur Koordinatenmessung ergeben sich aus den von Anspruch 6 abhängigen Ansprüchen.

Es wird nun eine Vorrichtung zur Koordinatenmessung vorgeschlagen mit einem Tastkopf, der bei Berührung eines Werkstücks ein Schaltsignal erzeugt, Positionsmesseinheiten für jede zu messende Koordinatenachse, mit denen die relative Position des Tastkopfes messbar ist und einer Verarbeitungseinheit, die zeitdiskret in Zeitintervallen eines Reglertaktsignals arbeitet. Zur Koordinatenmessung werden Positionsmesswerte in Zeitintervallen eines Abtasttaktsignals gemessen, das von einem Abtasttaktgenerator generiert wird und eine höhere Frequenz als das Regiertaktsignal der Verarbeitungseinheit aufweist. Die Positionsmesswerte werden in einem Positionsdatenspeicher abgespeichert. In einer Zeitmesseinheit wird eine Zeitspanne Δt zwischen einem Puls des Reglertaktsignals bis zum Auftreten des Schaltsignals am schaltenden Tastkopf bestimmt. Anhand der gemessenen Zeitspanne Δt wird schließlich in der Verarbeitungseinheit oder in den Positionsmesseinheiten der dem Zeitpunkt des Schaltsignals am nächsten liegende Positionswert im Positionsdatenspeicher ermittelt.

Besonders vorteilhaft ist es, wenn sich der Abtasttaktgenerator und der Positionsdatenspeicher zum Abspeichern der Positionswerte in der Positionsmesseinheit befinden, da dann die Anzahl der Positionswerte, die von der Positionsmesseinheit zur Verarbeitungseinheit übertragen werden müssen, erheblich gesenkt wird. Das gilt besonders dann, wenn die Datenübertragung zwischen den Positionsmesseinheiten und der Verarbeitungseinheit über serielle Schnittstellen erfolgt.

Weiterhin ist es vorteilhaft, wenn das Abtasttaktsignal mit dem Reglertaktsignal synchronisiert wird, um einen genauen zeitlichen Bezug zwischen dem Auftreten eines Schaltereignisses, dessen Zeitpunkt relativ zum Reglertaktsignal der Verarbeitungseinheit gemessen wird, und den Positionsmesswerten zu schaffen.

Weitere Vorteile sowie Einzelheiten der vorliegenden Erfindung ergeben sich aus der nachfolgenden Beschreibung einer Vorrichtung zur Koordinatenmessung und eines Verfahrens zur Koordinatenmessung anhand der Figuren. Dabei zeigt
Figur 1 ein Blockschaltbild einer bevorzugten Ausführungsform einer erfindungsgemäßen Vorrichtung zur Koordinatenmessung,
Figur 2 ein Blockschaltbild einer weiteren Ausführungsform einer erfindungsgemäßen Vorrichtung zur Koordinatenmessung und
Figur 3 ein Blockschaltbild einer dritten Ausführungsform einer erfindungsgemäßen Vorrichtung zur Koordinatenmessung.
Figur 4 ein Zeitdiagramm zur Erläuterung des zeitlichen Ablaufs eines erfindungsgemäßen Verfahrens zur Koordinatenmessung,

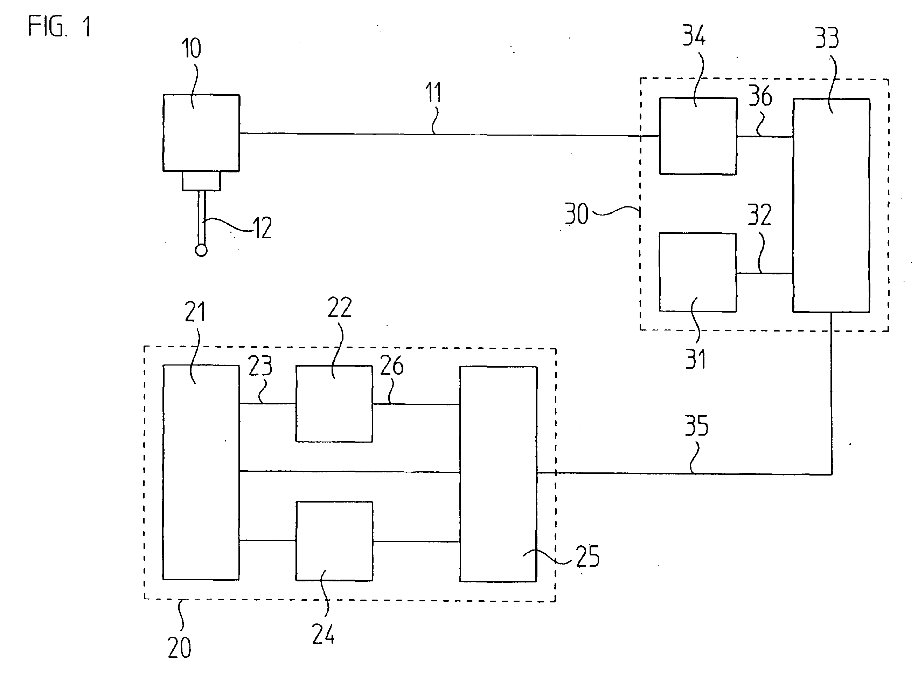

Figur 1 zeigt ein Blockschaltbild einer bevorzugten Ausführungsform einer erfindungsgemäßen Vorrichtung zur Koordinatenmessung. Sie besteht aus einem Tastkopf 10 mit einem Taststift 12, Positionsmesseinheiten 20 für jede zu messende Koordinatenachse, sowie einer Verarbeitungseinheit 30.

Der Tastkopf 10 erzeugt ein Schaltsignal, wenn der Taststift 12 bei Berührung eines Werkstücks ausgelenkt wird. Das Schaltsignal gelangt über eine Schaltleitung 11 zur Verarbeitungseinheit 30 und signalisiert, dass der Antastvorgang beendet ist. Bei der Schaltleitung 11 kann es sich sowohl um eine herkömmliche Kabelverbindung, als auch um eine Infrarot-Übertragungsstrecke handeln.

Bei der Verarbeitungseinheit 30 handelt es sich im Prinzip um eine numerische Steuerung. Sie enthält unter anderem Regelkreise, die dazu geeignet sind, Antriebe zu steuern, die den Tastkopf 10 positionieren. Derartige numerische Steuerungen sind bekannt und nicht Gegenstand der vorliegenden Erfindung. Im folgenden werden deshalb nur Funktionen beschrieben, die erfindungsrelevant sind.

In der Verarbeitungseinheit 30 befinden sich ein Regiertaktgenerator 31; eine Steuereinheit 33 und eine Zeitmesseinheit 34.

Der Reglertaktgenerator 31 stellt der Steuereinheit 33 mit einem Reglertaktsignal 32 eine Zeitbasis zur Verfügung, die festlegt, mit welcher Frequenz die Regelkreise in der Steuereinheit 33 arbeiten, bzw. in welchen Zeitintervallen Positionsmesswerte von den Positionsmesseinheiten 20 angefordert werden. Die Periodendauer des Reglertaktsignals 32 wird auch als Zykluszeit bezeichnet.

Die Steuereinheit 33 steuert den Antastvorgang. Zur Anforderung und Übertragung von Positionsmesswerten ist sie über einen ersten Datenübertragungskanal 35 mit der Positionsmesseinheit 20 verbunden. In dieser bevorzugten Ausführungsform erfolgt die Datenübertragung in serieller Form.

Die Zeitmesseinheit 34 dient dazu, eine Zeitspanne Δt zwischen dem Beginn einer Reglertaktperiode und einem Schaltereignis am Tastkopf 10 zu messen. Als Beginn einer Reglertaktperiode wird hierbei üblicherweise entweder die steigende oder die fallende Flanke des Reglertaktsignals 32 gewählt. Die Zeitmesseinheit 34 ist über einen zweiten Datenübertragungskanal 36 mit der Steuereinheit 33 verbunden. Außerdem ist ihr das Schaltsignal des Tastkopfs 10 über die Schaltleitung 11 zugeführt. Über den zweiten Datenübertragungskanal 36 wird die Zeitmesseinheit 34 von der Steuereinheit 33 zu Beginn jeder Reglertaktperiode zurückgesetzt und neu gestartet. Darüber hinaus wird der Steuereinheit 33 über den zweiten Datenübertragungskanal 35 das Eintreffen eines Schaltereignisses signalisiert und die Zeitspanne Δt übermittelt.

Die Positionsmesseinheit 20 setzt sich aus einem Positionsmessgerät 21, einem Abtasttaktgenerator 22, einem Positionsdatenspeicher 24 und einer Schnittstelleneinheit 25 zusammen. Obwohl in Figur 1 nur eine Positionsmesseinheit 20 dargestellt ist, ist es für den Fachmann offensichtlich, dass je nach Anzahl der zu messenden Koordinatenachsen mehrere Positionsmesseinheiten 20 benötigt werden.

Dass sich sowohl der Abtasttaktgenerator 22 als auch der Positionsdatenspeicher 24 in der Positionsmesseinheit 20 befinden, ist besonders vorteilhaft, da dadurch die Anzahl der Positionswerte, die zur Verarbeitungseinheit 30 übertragen werden müssen, reduziert wird. Dieser Vorteil kommt besonders zum Tragen, wenn der Datenaustausch zwischen der Positionsmesseinheit 20 und der Verarbeitungseinheit 30 über eine serielle Schnittstelle erfolgt. Beträgt die Datenübertragungsrate beispielsweise 2 MBit/s, so dauert die serielle Übertragung eines Positionswertes mit 32 Bit Breite mindestens 16 µs. Wenn man als Zykluszeit der Verarbeitungseinheit 30 die oben bereits erwähnten 50 µs annimmt, würde das bedeuten, dass je Periode des Reglertaktsignals 32 nur maximal zwei zusätzliche Positionswerte gemessen werden könnten. Diese Einschränkung wird durch den in Figur 1 vorgeschlagenen Aufbau der Positionsmesseinheit 20 umgangen.

Als Positionsmessgerät 21 können bekannte Geräte eingesetzt werden, die Positionsdaten in digitaler Form zur Verfügung stellen. Der Abtasttaktgenerator 22 erzeugt ein Abtasttaktsignal 23, das ein Zeitraster vorgibt, in welchem Positionswerte während des Antastvorganges vom Positionsmessgerät 21 angefordert werden. Das Abtasttaktsignal 23 weist dabei eine höhere Frequenz als das Reglertaktsignal 32 auf. Dabei ist es besonders vorteilhaft, wenn für die Frequenz des Abtasttaktsignals 23 ein ganzzahliges Vielfaches der Frequenz des Reglertaktsignals 32 gewählt wird. Außerdem ist es von Vorteil, das Abtasttaktsignal 23 mit dem Reglertaktsignal 32 zu synchronisieren, um einen exakten zeitlichen Bezug zwischen den beiden Taktsignalen zu schaffen.

Die Schnittstelleneinheit 25 ist über den ersten Datenübertragungskanal 35 mit der Steuereinheit 33 verbunden. Über die Schnittstelleneinheit 25 können Positionswerte entweder aus dem Positionsdatenspeicher 24, oder direkt vom Positionsmessgerät 21 angefordert und zur Steuereinheit 33 übertragen werden. Außerdem stellt sie dem Abtasttaktgenerator 22 ein Synchronisierungssignal 26 zur Verfügung und stoppt die Erfassung und Abspeicherung von Positionswerten, wenn ihr über den ersten Datenübertragungskanal 35 ein entsprechender Befehl übermittelt wird.

Die Positionsdaten werden im Positionsdatenspeicher 24 abgelegt. Der Positionsdatenspeicher 24 muss mindestens so viele Speicherzellen umfassen, dass sich nach Ende des Antastvorgangs der Positionswert, der dem Antastzeitpunkt zeitlich am nächsten liegt, im Positionsdatenspeicher 24 befindet. Speicherzellen, die Positionswerte enthalten, die nicht mehr benötigt werden, können überschrieben werden. Daher ist es von Vorteil, wenn der Positionsdatenspeicher 24 als zyklisch überschreibbarer Ringspeicher ausgeführt ist, d.h. dass der aktuell abzuspeichernde Positionswert den ältesten, nicht mehr benötigten Positionswert im Positionsdatenspeicher 24 überschreibt.

Die Ermittlung des Speicherbedarfs für den Positionsdatenspeicher 24 soll am folgenden Beispiel erläutert werden. Entspricht die Frequenz des Abtasttaktsignals 23 dem zehnfachen der Frequenz des Reglertaktsignals 32 und erfolgt die Kommunikation zwischen Verarbeitungseinheit 30 und Positionsmesseinheit 20 zeitdiskret im Abstand der Periodendauer des Reglertaktsignals 32, so müssen zehn Positionswerte je Regiertaktperiode gespeichert werden. Das liegt darin begründet, dass das Schaltsignal vom Tastkopf 10 zu jedem beliebigen Zeitpunkt zwischen zwei Kommunikationszeitpunkten eintreffen kann. Jeder der Positionswerte im Positionsdatenspeicher 24, der seit dem letzten Zugriff der Verarbeitungseinheit 30 auf die Positionsmesseinheit 20 gemessen wurde, kann demzufolge der dem Schaltsignal am nächsten liegende sein.

Beim Antastvorgang wird der Tastkopf 10, gesteuert von der Verarbeitungseinheit 30, auf das zu vermessende Werkstück zu bewegt. Dabei werden von der Steuereinheit 33 kontinuierlich im zeitlichen Abstand der Periodendauer des Reglertaktsignals 32 über den ersten Datenübertragungskanal 35 und die Schnittstelleneinheit 25 Positionswerte von den Positionsmessgeräten 21 angefordert. Die Steuereinheit 33 benötigt diese Positionswerte als Lageistwerte für die Regelkreise zur Steuerung der Antriebe. Bei Eintreffen einer Positionsdatenanforderung synchronisiert die Schnittstelleneinheit 25 das Abtasttaktsignal 23 mit dem Reglertaktsignal 32 über das Synchronisierungssignal 26. Außerdem wird von der Steuereinheit 33 über den zweiten Datenübertragungskanal 36 zu Beginn jeder Reglertaktperiode die Zeitmesseinheit 34 zurückgesetzt und neu gestartet. Parallel dazu werden im zeitlichen Abstand der Periodendauer des Abtasttaktsignals 23 Positionswerte gemessen und im Positionsdatenspeicher 24 abgelegt.

Der Tastkopf 10 signalisiert der Verarbeitungseinheit 30 durch ein Signal auf der Schaltleitung 11, wenn der Taststift 12 bei Berührung des Werkstückes ausgelenkt wurde. Daraufhin stoppt die Steuereinheit 33 die Antriebe und die Zeitspanne Δt zwischen dem Beginn der Reglertaktperiode und dem Schaltereignis wird in der Zeitmesseinheit 34 festgehalten. Darüber hinaus muss der Positionsmesseinheit 20 übermittelt werden, dass keine weiteren Positionsdaten mehr benötigt werden. Das kann beispielsweise in Figur 1 durch die Übertragung eines Befehlswortes über den ersten Datenübertragungskanal 35 zur Schnittstelleneinheit 25 geschehen. Alternativ dazu könnte die Schaltleitung 11 zusätzlich mit der Positionsmesseinheit 20 verbunden werden (nicht dargestellt) und den Abtasttaktgenerator 22 im Falle eines Schaltereignisses stoppen.

Mit Hilfe der Zeitspanne Δt und dem bekannten zeitlichen Bezug zwischen dem Regiertaktsignal 32 und dem Abtasttaktsignal 23 kann nun in der Steuereinheit 33 der dem Schaltereignis am nächsten liegende Positionswert im Positionsdatenspeicher 24 ermittelt und zur Weiterverarbeitung über den ersten Datenübertragungskanal 35 und die Schnittstelleneinheit 25 zur Steuereinheit 33 übertragen werden.

Bei der Ermittlung des dem Schaltereignis am nächsten liegenden Positionswertes ist es besonders vorteilhaft, wenn die Laufzeit des Schaltsignals bis zum Eintreffen in der Verarbeitungseinheit 30 mit einbezogen wird. Das gilt besonders dann, wenn die Schaltleitung 11 nicht als elektrische Leitung, sondern als drahtlose Übertragungsstrecke ausgebildet ist, bei der das Schaltsignal beispielsweise mit Hilfe von Infrarotlichtimpulsen übertragen wird. Die Laufzeit des Schaltsignals kann beispielsweise in der Steuereinheit abgespeichert sein. Die Ermittlung der Signallaufzeit ist nicht Gegenstand der vorliegenden Erfindung.

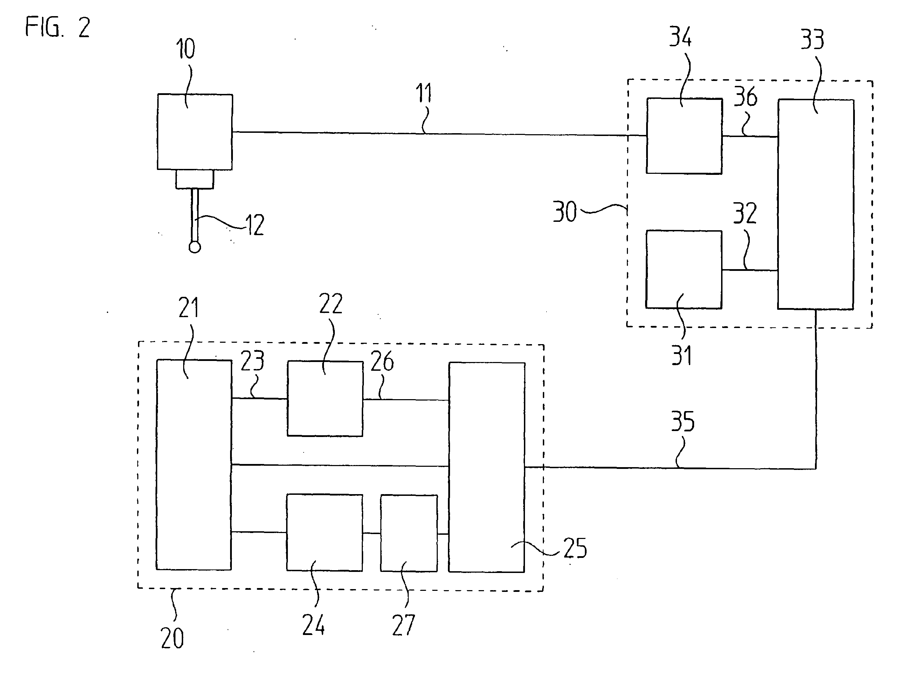

Figur 2 zeigt ein Blockschaltbild einer weiteren Ausführungsform einer erfindungsgemäßen Vorrichtung zur Koordinatenmessung. Abweichend zum in Figur 1 dargestellten Beispiel enthält jede Positionsmesseinheit 20 in Figur 2 zusätzlich eine Auswerteeinheit 27. Der weitere Aufbau entspricht jenem von Figur 1. Gleiche Komponenten sind mit den gleichen Bezugszeichen versehen. Auf ihre Erklärung wird verzichtet.

Signalisiert der Tastkopf 10 über die Schaltleitung 11 der Verarbeitungseinheit 30, dass die Oberfläche des Werkstücks erreicht wurde, wird in dieser Ausführungsform der Positionswert, der dem Antastzeitpunkt am nächsten liegt, nicht in der Verarbeitungseinheit 30 von der Steuereinheit 33, sondern in der Positionsmesseinheit 20 von der Auswerteeinheit 27 ermittelt. Zu diesem Zweck überträgt die Steuereinheit 33 die von der Zeitmesseinheit 34 gemessene Zeitspanne Δt über den ersten Datenübertragungskanal 35 und die Schnittstelleneinheit 25 zur Auswerteeinheit 27. Diese ermittelt anhand der Zeitspanne Δt den dem Antastzeitpunkt am nächsten liegenden Positionswert im Positionsdatenspeicher 24 und überträgt ihn zur Verarbeitungseinheit 30.

Die Laufzeit des Schaltsignals kann in diesem Beispiel dadurch berücksichtigt werden, dass entweder die Steuereinheit 33 die gemessene Zeitspanne Δt um die Signallaufzeit korrigiert und den korrigierten Wert zur Auswerteeinheit 27 überträgt, oder die Auswerteinheit 27 die Signallaufzeit bei der Ermittlung des Ergebnisses mit einbezieht.

Besonders vorteilhaft an diesem Verfahren ist es, dass die Steuereinheit 33, die während des Antastvorgangs stark ausgelastet ist, dadurch erheblich entlastet wird.

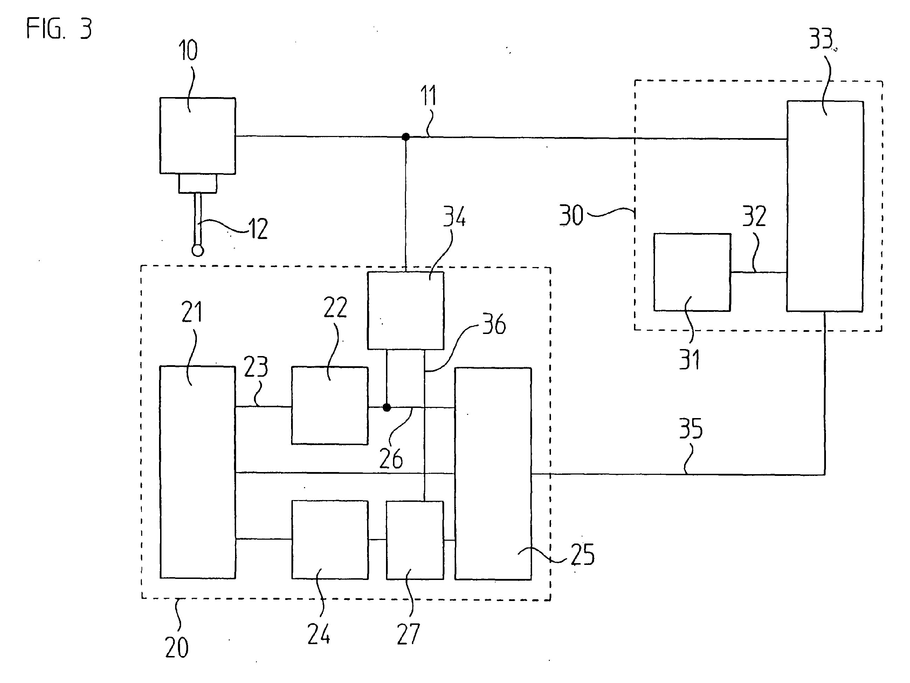

Figur 3 zeigt schließlich ein Blockschaltbild einer dritten Ausführungsform der vorliegenden Erfindung. Im Vergleich zu den vorhergehenden Beispielen befindet sich die Zeitmesseinheit 34 nicht mehr in der Verarbeitungseinheit 30. Statt dessen ist nun in jeder Positionsmesseinheit 20 eine Zeitmesseinheit 34 vorgesehen. Ebenso wie in der Ausführungsform von Figur 2 enthalten die Positionsmesseinheiten 20 auch im Beispiel von Figur 3 eine Auswerteeinheit 27. Der weitere Aufbau entspricht jenem von Figur 1, er wird daher nicht noch einmal beschrieben. Gleiche Komponenten sind mit den gleichen Bezugszeichen versehen.

Die Schaltleitung 11 über die der Tastkopf 10 das Schaltsignal ausgibt, ist mit jeder Zeitmesseinheit 34 und mit der Steuereinheit 33 in der Verarbeitungseinheit 30 verbunden. Dabei dient die Verbindung zur Zeitmesseinheit 34 dazu, bei Auftreten eines Schaltsignals die Zeitmessung zu stoppen. Der Steuereinheit 33 wird über die Schaltleitung 11 mitgeteilt, dass der Antastvorgang beendet ist und damit die Antriebe gestoppt und die dem Antastereignis zugehörigen Positionswerte von den Positionsmesseinheiten 20 angefordert werden können. Da in diesem Ausführungsbeispiel die Schaltleitung 11 mit mehreren, räumlich voneinander getrennt angeordneten Komponenten verbunden ist, ist es besonders vorteilhaft, wenn die Verbindung nicht über elektrische Leitungen, sondern über drahtlose Übertragungsstrecken erfolgt. Geeignete drahtlose Übertragungsstrecken können beispielsweise durch Hochfrequenzsende-und -empfangseinheiten oder auch durch Infrarotsender und -empfänger gebildet werden.

Innerhalb der Positionsmesseinheit 20 ist das Synchronisierungssignal 26 nicht nur dem Abtasttaktgenerator 22, sondern auch der Zeitmesseinheit 34 zugeführt. Dadurch ist die Zeitmesseinheit 34 bei jeder Positionsdatenanforderung rücksetzbar. Da die Positionsdatenanforderungen weiterhin zeitdiskret in Zeitintervallen des Reglertaktsignals 32 erfolgen, ist somit in der Zeitmesseinheit 34 auch weiterhin die Zeitspanne Δt zwischen einem Puls des Reglertaktsignals 32 und dem Auftreten des Schaltsignals am schaltenden Tastkopf 10 messbar.

Die Zeitmesseinheit 34 ist mit der Auswerteeinheit 27 über den zweiten Datenübertragungskanal 36 verbunden. Über diesen ist die mit der Zeitmesseinheit 34 gemessene Zeitspanne Δt zur Auswerteeinheit 27 übertragbar. Mit dieser Information ist es der Auswerteeinheit 27 wiederum möglich, den dem Zeitpunkt des Auftretens des Schaltsignals am schaltenden Tastkopf 10 am nächsten liegenden Positionswert im Positionsdatenspeicher 24 zu ermitteln. Auch in diesem Ausführungsbeispiel ist es vorteilhaft, wenn die Auswerteeinheit 27 bei der Ermittlung des dem Schaltereignis am nächsten liegenden Positionswertes die Laufzeit des Schaltsignals berücksichtigt. Der resultierende Positionswert kann entweder automatisch oder auf Anforderung der Verarbeitungseinheit 30 von der Auswerteeinheit 27 über die Schnittstelleneinheit 25 und den ersten Datenübertragungskanal 35 zur Steuereinheit 33 übertragen werden.

Da in dieser Ausführungsform nun auch die Erfassung der Zeitspanne Δt in den Positionsmesseinheiten 20 durchgeführt wird, wird die Verarbeitungseinheit 20 im Vergleich zu den vorhergehenden Beispielen noch weiter entlastet.

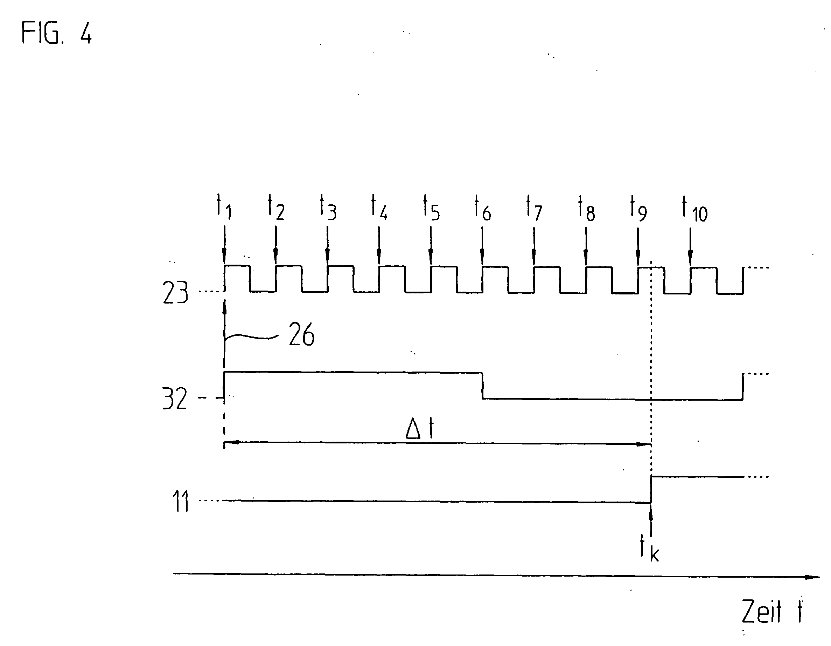

Figur 4 zeigt ein vereinfachtes Zeitdiagramm eines erfindungsgemäßen Verfahrens zur Koordinatenmessung in dem der zeitliche Zusammenhang zwischen Regiertaktsignal 32, Abtasttaktsignal 23 und der Schaltleitung 11 des Tastkopfes 10 noch einmal detailliert dargestellt ist. In diesem Beispiel hat das Abtasttaktsignal 23 die zehnfache Frequenz des Reglertaktsignals 32.

Zum Zeitpunkt t₁ beginnt eine Reglertaktperiode mit einer steigenden Flanke des Reglertaktsignals 32. Zu diesem Zeitpunkt wird die Zeitmesseinheit 34 über den zweiten Datenübertragungskanal 36 zurückgesetzt und neu gestartet. Außerdem wird von der Steuereinheit 33 über den ersten Datenübertragungskanal 35 und die Schnittstelleneinheit 25 ein Positionswert von der Positionsmesseinheit 20 angefordert. Gleichzeitig mit der Positionsdatenanforderung wird das Abtasttaktsignal 23 mit dem Reglertaktsignal 32 über das Synchronisierungssignal 26 synchronisiert. Anschließend werden zu den Zeitpunkten t₁, t₂,..., t₁₀ im Positionsmessgerät 21 der Positionsmesseinheit 20 jeweils Positionswerte gemessen und im Positionsdatenspeicher 24 abgelegt.

Zum Kontaktzeitpunkt tₖ signalisiert ein Pegelwechsel auf der Schaltleitung 11 den Kontakt des Taststiftes 12 mit dem Werkstück. Daraufhin wird die Zeitmessung in der Zeitmesseinheit 34 gestoppt und der genaue Zeitpunkt des Schaltsignals bezogen auf die steigende Flanke des Reglertaktsignals 32 steht in Form von der gemessenen Zeitspanne Δt zur Verfügung. Die Zeitspanne Δt wird über den zweiten Übertragungskanal 36 zur Steuereinheit 33 übertragen, die anschließend den dem Schaltereignis am nächsten liegenden Positionswert ermittelt. Im Fall des Beispiels in Figur 4 liegt der Positionswerte, der zum Zeitpunkt t₉ gemessen wurde, dem Kontaktzeitpunkt tₖ am nächsten und stellt damit das Ergebnis des Antastvorgangs dar. Dieser Positionswert kann schließlich über den ersten Datenübertragungskanal 35 zur Steuereinheit 33 übertragen und dort weiter verarbeitet werden.

Da den Positionswerten im Positionsdatenspeicher 24 exakte Messzeitpunkte t₁, t₂,..., t₁₀ zugeordnet sind, kann die Genauigkeit des Ergebnisses durch Interpolation weiter verbessert werden. Dazu benötigt man den Positionswert vor und den Positionswert nach dem Kontaktzeitpunkt tₖ, sowie den Wert der Zeitspanne Δt. Da die Vorschubgeschwindigkeit des Tastkopfs 10 während des Antastvorgangs als konstant angenommen werden kann, ergibt sich ein linearer Zusammenhang zwischen den zwei Positionswerten, über den der exakte Positionswert nach Ablauf der Zeitspanne Δt interpoliert werden kann.

Analog dazu ist es möglich, die Genauigkeit des Ergebnisses durch Extrapolation unter Verwendung des ermittelten Positionswertes, der dem Kontaktzeitpunkt tₖ am nächsten liegt, der Zeitspanne Δt und der bekannten Antastgeschwindigkeit zu verbessern.

Die beschriebenen Ausführungsformen einer Vorrichtung zur Koordinatenmessung, sowie des Verfahrens zur Koordinatenmessung an einem Werkstück lassen sich im Rahmen der durch die Ansprüche 1 und 6 definierten Erfindung selbstverständlich abwandeln und an verschiedenste Anforderungen anpassen.

## Patentansprüche

1. Verfahren zur Koordinatenmessung an einem Werkstück mit einer Vorrichtung zur Koordinatenmessung bestehend aus einem Tastkopf (10), der bei Berührung des Werkstücks ein Schaltsignal erzeugt, Positionsmesseinheiten (20) für jede zu messende Koordinatenachse, mit denen die relative Position des Tastkopfes (10) messbar ist und einer Verarbeitungseinheit (30), die zeitdiskret in Zeitintervallen eines Regiertaktsignals (32) arbeitet, mit folgenden Schritten:
• Messung von Positionswerten in Zeitintervallen eines Abtasttaktsignals (23), das eine höhere Frequenz als das Reglertaktsignal (32) der Verarbeitungseinheit (30) aufweist,
• Abspeichern der Positionswerte in einem Positionsdatenspeicher (24),
• Messung einer Zeitspanne (Δt) zwischen einem Puls des Reglertaktsignals (32) bis zum Auftreten des Schaltsignals am schaltenden Tastkopf (10) in einer Zeitmesseinheit (34) und
• Ermitteln des dem Zeitpunkt des Schaltsignals am nächsten liegenden Positionswertes aus den abgespeicherten Positionswerten im Positionsdatenspeicher (24) anhand der gemessenen Zeitspanne (Δt) in der Verarbeitungseinheit (30) oder in der Positionsmesseinheit (20).

2. Verfahren nach Anspruch 1, wobei die Frequenz des Abtasttaktsignals (23) ein ganzzahliges Vielfaches der Frequenz des Reglertaktsignals (32) ist.

3. Verfahren nach Anspruch 1 oder 2, wobei das Abtasttaktsignal (23) mit dem Reglertaktsignal (32) synchronisiert wird.

4. Verfahren nach einem der vorhergehenden Ansprüche, wobei durch Interpolation unter Verwendung der beiden Positionswerte unmittelbar vor und unmittelbar nach dem Eintreffen des Schaltsignals in der Verarbeitungseinheit (30) und der gemessenen Zeitspanne (Δt) die Genauigkeit weiter verbessert wird.

5. Verfahren nach einem der vorhergehenden Ansprüche, wobei durch Extrapolation unter Verwendung des Positionswertes, der dem Zeitpunkt des Eintreffens des Schaltsignals in der Verarbeitungseinheit (30) am nächsten liegt, der bekannten Vorschubgeschwindigkeit des Tastkopfs (10) und der gemessenen Zeitspanne (Δt) die Genauigkeit weiter verbessert wird.

6. Vorrichtung zur Koordinatenmessung an einem Werkstück, bestehend aus einem Tastkopf (10), der bei Berührung des Werkstücks ein Schaltsignal erzeugt, Positionsmesseinheiten (20) für jede zu messende Koordinatenachse, mit denen die relative Position des Tastkopfes (10) messbar ist und einer Verarbeitungseinheit (30), die zeitdiskret in Zeitintervallen eines Reglertaktsignals (32) arbeitet, wobei
• mindestens ein Abtasttaktgenerator (22) vorhanden ist, in dem ein Abtasttaktsignal (23) generierbar ist, das eine höhere Frequenz als das Regiertaktsignal (32) der Verarbeitungseinheit (30) aufweist und die Messung von Positionswerten in den Positionsmesseinheiten (20) steuert,
• mindestens ein Positionsdatenspeicher (24) vorhanden ist, in dem Positionswerte speicherbar sind,
• eine Zeitmesseinheit (34) vorhanden ist, der das Schalt signal zugeführt ist und mit der die Zeitspanne (Δt) zwischen einem Puls des Regiertaktsignals (32) bis zum Eintreffen des Schaltsignals messbar ist, und wobei
• die Verarbeitungseinheit (30) oder jede Positionsmesseinheit (20) Mittel enthält, um aus der gemessenen Zeitspanne (Δt) den dem Zeitpunkt des Eintreffens des Schaltsignals am nächsten liegenden Positionswert im Positionsdatenspeicher (24) zu bestimmen.

7. Vorrichtung zur Koordinatenmessung nach Anspruch 6, wobei sich in jeder Positionsmesseinheit (20) ein Abtasttaktgenerator (22) zur Erzeugung des Abtasttaktsignals (23) befindet.

8. Vorrichtung zur Koordinatenmessung nach Anspruch 6 oder 7, wobei das Abtasttaktsignal (23) mit dem Reglertaktsignal (32) synchronisierbar ist.

9. Vorrichtung zur Koordinatenmessung nach einem der Ansprüche 6 bis 8, wobei sich in jeder Positionsmesseinheit (20) ein Positionsdatenspeicher (24) befindet.

10. Vorrichtung zur Koordinatenmessung nach einem der Ansprüche 6 bis 9, wobei die Schnittstelleneinheit (25) eine serielle Schnittstelle ist.

## Claims

1. A method of coordinate measurement on a workpiece using a coordinate measuring device consisting of a probe (10), which generates a switch signal when it comes into contact with the workpiece, position measuring units (20) for each coordinate axis to be measured, with which the relative position of the probe (10) can be measured, and a processing unit (30), which works time-discretely at time intervals of a controller clock signal (32) with the following steps:
• measurement of positional values at time intervals of a sampling clock signal (23), which displays a higher frequency than the controller clock signal (32) of the processing unit (30),
• storage of the positional values in a positional data memory (24),
• measurement of a time interval (Δt) between a pulse of the controller clock signal (32) and occurrence of the switch signal at the switching probe (10) in a time measuring unit (34) and
• determination of the positional value closest to the switch signal time from the positional values stored in the positional data memory (24) using the measured time interval (Δt) in the processing unit (30) or in the position measuring unit (20).

2. The method according to claim 1, wherein the frequency of the sampling clock signal (23) is a whole-number multiple of the frequency of the controller clock signal (32).

3. The method according to claim 1 or 2, wherein the sampling clock signal (23) is synchronised with the controller clock signal (32).

4. The method according to one of the preceding claims, wherein the accuracy is further improved through interpolation using the two positional values immediately before and immediately after arrival of the switch signal in the processing unit (30) and the measured time interval (Δt).

5. The method according to one of the preceding claims, wherein the accuracy can be further improved through extrapolation using the positional value that is closest to the time of arrival of the switch signal in the processing unit (30), the known feed speed of the probe (10) and the measured time interval (Δt).

6. A device for coordinate measurement on a workpiece, consisting of a probe (10), which generates a switch signal when it comes into contact with the workpiece, position measuring units (20) for each coordinate axis to be measured, with which the relative position of the probe (10) can be measured, and a processing unit (30), which works time-discretely in time intervals of a controller clock signal (32), wherein
• at least one sampling clock generator (22) is present, in which a sampling clock signal (23) can be generated, which displays a higher frequency than the controller clock signal (32) of the processing unit (30) and controls the measurement of positional values in the position measuring units (20),
• at least one positional data memory (24) is present, in which positional values can be stored,
• a time measuring unit (34) is present, which supplies the switch signal and with which the time interval (Δt) between a pulse of the controller clock signal (32) and arrival of the switch signal can be measured and wherein
• the processing unit (30) or each position measuring unit (20) contains means of determining from the measured time interval (Δt) the closest positional value in the positional data memory (24) to the time of arrival of the switch signal.

7. The device for coordinate measurement according to claim 6, wherein there is a sampler clock generator (22) in each position measuring unit (20) to generate the sampling clock signal (23).

8. The device for coordinate measurement according to claim 6 or 7, wherein the sampling clock signal (23) can be synchronised with the controller clock signal (32).

9. The device for coordinate measurement according to one of the claims 6 to 8, wherein a positional data memory (24) is located in each position measuring unit (20).

10. The device for coordinate measurement according to one of the claims 6 to 9, wherein the interface unit (25) is a serial interface.

## Revendications

1. Procédé pour la mesure de coordonnées sur une pièce avec un dispositif de mesure de coordonnées comprenant un palpeur (10), qui génère un signal de commutation en cas de contact avec la pièce, des unités de mesure de position (20) pour chaque axe de coordonnées à mesurer, avec lesquelles la position relative du palpeur (10) peut-être mesurée et une unité de traitement (30), qui travaille de façon discrète dans le temps à des intervalles de temps d'un signal de cadence de régulateur (32), comprenant les étapes suivantes :
• mesure de valeurs de position à des intervalles de temps d'un signal de cadence de balayage (23), qui présente une fréquence supérieure au signal de cadence de régulateur (32) de l'unité de traitement (30),
• stockage des valeurs de position dans une mémoire de donnée de position (24),
• mesure d'un laps de temps (Δt) entre une impulsion du signal de cadence de régulateur (32) jusqu'à l'apparition du signal de commutation sur le palpeur (10) commutant dans une unité de mesure de temps (34) et
• détermination de la valeur de position située la plus près du moment du signal de commutation à partir des valeurs de position stockées dans la mémoire de données de position (24) à l'aide du laps de temps (Δt) mesuré dans l'unité de traitement (30) ou dans l'unité de mesure de position (20).

2. Procédé selon la revendication 1, la fréquence du signal de cadence de balayage (23) étant un multiple entier de la fréquence du signal de cadence de régulateur (32).

3. Procédé selon la revendication 1 ou 2, le signal de cadence de balayage (23) étant synchronisé avec: le signal de cadence de régulateur (32).

4. Procédé selon l'une quelconque des revendications précédentes, la précision étant encore améliorée par interpolation en utilisant les deux valeurs de position directement avant ou directement après l'arrivée du signal de commutation dans l'unité de traitement (30) et dans le laps de temps (Δt) mesuré.

5. Procédé selon l'une quelconque des revendications précédentes, la précision étant encore améliorée par extrapolation en utilisant la valeur de position qui est la plus proche du moment de l'arrivée du signal de commutation dans l'unité de traitement (30), la vitesse d'avancement connue du palpeur (10) et le laps de temps (Δt) mesuré.

6. Dispositif pour la mesure de coordonnées sur une pièce, comprenant un palpeur (10), qui génère un signal de commutation en cas de contact avec la pièce, des unités de mesure de position (20) pour chaque axe de coordonnées à mesurer, avec lesquelles la position relative du palpeur (10) peut être mesurée et une unité de traitement (30), qui travaille de façon discrète dans le temps à des intervalles de temps d'un signal de cadence de régulateur (32)
• au moins un générateur de cadence de balayage (22) étant présent, dans lequel un signal de cadence de balayage (23) peut être généré, lequel présente une fréquence supérieure au signal de cadence de régulateur (32) de l'unité de traitement (30) et commande la mesure de valeurs de position dans les unités de mesure de position (20),
• au moins une mémoire de données de position (24) étant présente, dans laquelle des valeurs de position peuvent être stockées,
• une unité de mesure de temps (34) étant présente, à laquelle le signal de commutation est amené et avec laquelle le laps de temps (Δt) entre une impulsion du signal de cadence de régulateur (32) jusqu'à l'arrivée du signal de commutation peut être mesuré, et
• l'unité de traitement (30) ou chaque unité de mesure de position (20) contenant des moyens pour déterminer à partir du laps de temps (Δt) mesuré la valeur de position la plus proche du moment de l'arrivée du signal de commutation dans la mémoire de données de position (24).

7. Dispositif pour la mesure de coordonnées selon la revendication 6, un générateur de cadence de balayage (22) pour la génération du signal de cadence de balayage (23) se trouvant dans chaque unité de position (20).

8. Dispositif pour la mesure de coordonnées selon la revendication 6 ou 7, le signal de cadence de balayage (23) pouvant être synchronisé avec le signal de cadence de régulateur (32).

9. Dispositif pour la mesure de coordonnées selon l'une quelconque des revendications 6 à 8, une mémoire de données de position (24) se trouvant dans chaque unité de mesure de position (20).

10. Dispositif pour la mesure de coordonnées selon l'une quelconque des revendications 6 à 9, l'unité d'interface (25) étant une interface série.
